# EUROPÄISCHE PATENTANMELDUNG

(11) **EP 3 629 549 A1**
(43) Veröffentlichungstag der Anmeldung: **01.04.2020**
(21) Anmeldenummer: 18196834.8
(22) Anmeldetag: 26.09.2018
(51) Int. Cl.: H04L 29/08, H04L 29/06

(54) **VERFAHREN UND ANORDNUNG ZUM BETRIEB EINER ANWENDUNG AUF EINEM INDUSTRIELLEN BEDIEN- UND BEOBACHTUNGSGERÄT**

(71) Anmelder: Siemens Aktiengesellschaft, 80333 München (DE)
(72) Erfinder: Herberth, Harald, 90522 Oberasbach (DE); Strobel, Holger, 90556 Steinbach (DE)

(57) **Zusammenfassung**

Die Erfindung betrifft ein Verfahren und eine Anordnung zum Betrieb einer Anwendung (HMI-A) auf einem industriellen Bedien- und Beobachtungsgerät, wobei das industrielle Bedien-und Beobachtungsgerät mittels einer proprietären industriellen Kommunikationsverbindung an eine Kommunikations-Infrastruktur (HMI-I) angebunden und darüber mit einem HMI-Server verbunden ist, und wobei die Anwendung (HMI-A) zur Kommunikation mittels eines Internet-Protokolls eingerichtet ist. Dabei wird in der Kommunikations-Infrastruktur ein Reverse-Proxyserver (RP) mit einem Web-Socket-Interface (O-Socket) vorgesehen, wobei die Anwendung zur Kommunikation mit dem Web-Socket-Interface des Reverse-Proxyservers (RP) eingerichtet wird, wobei diese Kommunikation innerhalb eines Kommunikationskanals der industriellen Kommunikationsverbindung durchgeführt wird, wobei der Reverse-Proxyserver (RP) zur Kommunikation mit dem HMI-Server mittels einer weiteren proprietären industriellen Kommunikationsverbindung eingerichtet wird, wobei der HMI-Server zur Kommunikation mit einem Web-Socket-Interface (W-Socket) zumindest eines Ziel-Servers (Z-S) mittels eines Internet-Protokolls eingerichtet wird, und wobei der HMI-Server zur Umsetzung einer Kommunikation zwischen dem Reverse-Proxyserver (RP) und dem Ziel-Server (Z-S) eingerichtet wird. Das bietet den Vorteil, dass eine zu integrierende Anwendung ihre Kommunikation, die Web-basiert ist bzw. auf Web-Sockets basiert, weiter nutzen kann, und gleichzeitig können alle Infrastrukturelemente, insbesondere Security-Einrichtungen, Redundanzverfahren etc. der proprietären industriellen Kommunikation weiterverwendet werden.

## Beschreibung

Die Erfindung betrifft ein Verfahren zum Betrieb einer Anwendung auf einem industriellen Bedien- und Beobachtungsgerät gemäß dem Oberbegriff des Patentanspruchs 1, und eine Anordnung zum Betrieb einer Anwendung auf einem industriellen Bedien- und Beobachtungsgerät gemäß dem Oberbegriff des Patentanspruchs 6.

Eine Lösung zum Bedienen und Beobachten in der Industrieautomatisierung (HMI System) stellt dem Anwender Möglichkeiten zur Verfügung, wie dieser Anwendungsoberflächen als Bedienbilder - sogenannte HMI Screens - projektieren kann. In diesen HMI Screens werden Ein-/Ausgabe-Elemente definiert (z.B. Balkenanzeige oder Rundzeigerinstrument) und deren Werteversorgung (Abbildung auf Sensoren bzw. Aktoren) bzw. Verhalten definiert. Dabei legt das HMI-System fest, über welche Elemente und Möglichkeiten der Anwender dabei verfügt.

Moderne HMI-Systeme stellen dem Anwender auch Möglichkeiten zur Verfügung, eigene Oberflächen in einer anderen Technologie auszuprägen, z.B. als Webanwendung mit HTML, JavaScript und CSS. Dies ist notwendig, da Web-Anwendungen von einer breiten Masse von Anwendern immer einfacher erstellt oder bezogen werden können, und diese Erstellung durch viele Frameworks und Bibliotheken sehr gut unterstützt wird. Zudem wird die Erstellung von Lösungen auf Basis von Web-Technologien durch deren extrem weite Verbreitung von immer mehr Entwicklern wie selbstverständlich beherrscht.

Eine vorliegende Web-Anwendung besteht i.d.R aus den folgenden Komponenten:
- Client-Anteil (im Folgenden auch als "Anwendung" bezeichnet): Single Page Application (SPA), in JavaScript geschrieben, i.d.R unter Verwendung eines Frameworks wie z.B. Angular und Bibliotheken wie z.B. D3.
- Applikations-Webserver (im Folgenden auch als "Ziel-server" bezeichnet): Zum Bespiel einen in node.js erstellten Webserver, der die SPA und die von ihr benötigten (Echtzeit-) Daten zur Verfügung stellt, wobei zur Erstellung dieses Servers auf viele Frameworks und Bibliotheken (v.a. im Umfeld des IoT) zurückgegriffen werden kann (z.B. Express, socket.io, Cylon.js, MongoDB, CouchDB, RethinkDB).
- Kommunikation (im Folgenden auch als "Kommunikations-Infrastruktur" bezeichnet): Einer (echtzeitfähigen) Kommunikation zwischen Client und Server, i.d.R. auf WebSocket basierend, unter Verwendung von Bibliotheken wie socket.io, WAMP, MQTT, ....

Bei der Integration dieser Web-Anwendungen in das HMI/SCADA System entsteht nun das Problem, dass selbst dann, wenn der Client-Anteil in Form eines sogenannten Custom-Controls in den HMI-Screen eingebunden werden kann, die Kommunikation ohne aufwändige Änderungen weiterhin mittels Websocket zu dem bestehenden Applikations-Webserver stattfinden muss. Bei der Integration ist nämlich wesentlich zu betrachten, dass viele dieser Webapplikationen und insbesondere der Server-Anteil schon fertig vorliegen (bereits entwickelt oder von Dritten zugekauft) und der Anwender diese gar nicht anpassen kann oder mit möglichst geringem Aufwand anpassen können muss, und dann am besten nur durch Verändern von Konfigurationswerten, wie z.B. Adressen (URLs). Eine Umstellung auf eine HMI/SCADA spezifische Kommunikations- bzw. Serverumgebung ist nicht realistisch möglich, da dies enorme Aufwände zum Verstehen der verwendeten Kommunikationslösung sowie der durch HMI/SCADA angebotenen Kommunikationslösung ("proprietäre industrielle Kommunikationsverbindung"), und dann erst zum Überführen der ursprünglichen in die von HMI/SCADA angebotenen Kommunikationslösung erfordern würde.

Bleiben die Kommunikation und der Web-Server unverändert bestehen, sind unter anderem auch die folgenden Probleme zu meistern:
- Der Browser kann die Kommunikation zum bestehenden Server komplett verweigern, da jetzt die Client-Applikation vom HMI-Server (dies kann auch immer ein SCADA-Server sein) geladen wird, und der Browser aufgrund der Same Origin Policy (SOP) standardmäßig nur mit dem SCADA Server Daten austauscht. Damit müssen der eigene HMI-Server und der Client angepasst werden.
- Werden zu viele solcher Custom-Controls als "Anwendung" bzw. als ein Teil von "Anwendungen" eingebunden, kann sich das negativ auf den Browser auswirken, da Browser die Anzahl der gleichzeitigen Kommunikationsverbindungen beschränken.
- Der Anwender muss sich sowohl im HMI/SCADA-System bzw.-Server als auch in seiner Anwendung bzw. Applikation authentifizieren sowie HTTPS und die Zertifikate richtig konfigurieren.
- Betriebszeiten des HMI/SCADA-Systems bzw. HMI-Servers und des eigenen Systems (Client mit der Anwendung) sind nicht synchronisiert, es kann zu Fällen der Nichtverfügbarkeit kommen.
- Das HMI-System hat Vorkehrungen in seiner Infrastruktur, um Kommunikation und Server redundant zu halten. Die eigene Anwendung wird von diesen Vorkehrungen nicht profitieren können.
- Der Kunde muss auf dem Weg vom Browser zu den Servern beide Kommunikationspfade (zum HMI-Server und zum eigenen Web-Server) freischalten (Proxy, Firewall, NAT, ...), verfügbar machen und halten (Availability) sowie absichern (DoS).

Im Stand der Technik ist die eigene Webapplikation entweder gar nicht in das HMI/SCADA System integriert, oder nur einfach auf Clientseite, z.B. unter Verwendung eines Custom-Controls im HMI-Screen. Dabei läuft die Webanwendung in diesem Custom-Control, und Kommunikation sowie der Web-Server sind nicht weiter in das HMI/SCADA-System integriert. Damit sind viele der o.g. Probleme noch nicht gelöst, sondern müssen in Kauf genommen werden.

Es ist also eine Aufgabe der vorliegenden Erfindung, eine Web-Applikation bzw. Web-basierte GUI-Elemente ("controls") mittels einer vorhandenen, proprietären Kommunikationsinfrastruktur an einen externen Server, insbesondere einen externen Web-Server ("Ziel-Server"), aus Anwendungssicht transparent anzubinden.

Die Kernidee zur Lösung dieser Aufgabe sieht vor, zur Anbindung dieser Web-basierten Controls und anderer Anwendungs-Bestandteile in der Kommunikationsinfrastruktur ein spezielles Web- Interface, einen sogenannten "OpenSocket" bereitzustellen. Der "OpenSocket" stellt aus Applikationssicht über einen integrierten Reverse-Proxyserver einen Kommunikations-Kanal zur Verfügung, über den Zugriffe, also beispielsweise sog. XML-HTTP-Requests (XHR) oder Web-Sockets, erfolgen können. Dabei erfolgt die Datenübertragung dieses Kanals teilweise (außer an den "Rändern") innerhalb des Kommunikationssystems des HMI/SCADA Systems und somit innerhalb eines Kanals einer proprietären Kommunikationsverbindung. Die bestehende Infrastruktur bezüglich Performance, Verfügbarkeit und vor allem Security (Sicherheit) kann daher auch für die Kommunikation der bestehenden Anwendung verwendet werden; sie wird also vollumfänglich integriert.

Aus Client-Sicht besteht die notwendige Anpassung nur in der Konfiguration einer anderen Adresse für die Serververbindung. Sollte dies nicht möglich sein, kann eine bestehende relative URL-Adresse auch in der Konfiguration des Reverse-Proxyservers angegeben werden, der dann die neue bzw. die unveränderte URL abfängt und Verbindungen zu dieser URL transparent an den "alten" adressierten Server weiterleitet. Der Reverse-Proxyserver wird so konfiguriert, dass sich das Adressierschema sowohl aus Sicht des Clients als auch aus Sicht des HMI-Servers (also unter welcher URL ist der Dienst auf dem vorhandenen HMI-Server erreichbar) strukturell nicht ändert, d.h. die Art der Adressierung etc. bleibt unverändert, ggf. muss aber die Adresse selbst angepasst werden.

Sollte die alte URL z.B. /application/api gewesen sein, so kann diese entweder wie beschrieben abgefangen und umgesetzt werden, oder bevorzugt durch Konfiguration im Client auf eine mögliche Standardform (z.B. /Openness/ApplicationX/) geändert werden.

Die Lösung der Aufgabe sieht insbesondere ein Verfahren gemäß dem Patentanspruch 1 und eine Anordnung gemäß dem Patentanspruch 6 vor.

Dabei wird ein Verfahren zum Betrieb einer Anwendung auf einem industriellen Bedien- und Beobachtungsgerät verwendet, wobei das industrielle Bedien- und Beobachtungsgerät mittels einer proprietären industriellen Kommunikationsverbindung an eine Kommunikations-Infrastruktur angebunden und darüber mit einem HMI-Server verbunden ist, und wobei die Anwendung zur Kommunikation mittels eines Internet-Protokolls eingerichtet ist. Dabei wird in der Kommunikations-Infrastruktur ein Reverse-Proxyserver mit einem Web- Interface (z.B. Web-Socket-Interface oder http-Interface) vorgesehen, wobei die Anwendung zur Kommunikation mit dem Web-Interface des Reverse-Proxyservers eingerichtet wird, wobei diese Kommunikation innerhalb eines Kommunikationskanals der industriellen Kommunikationsverbindung durchgeführt wird, wobei der Reverse-Proxyserver zur Kommunikation mit dem HMI-Server mittels einer weiteren proprietären industriellen Kommunikationsverbindung eingerichtet wird, wobei der Server zur Kommunikation mit einem Web- Interface zumindest eines Ziel-Servers mittels eines Internet-Protokolls eingerichtet wird, und wobei der Server zur Umsetzung einer Kommunikation zwischen dem Reverse-Proxyserver und dem Ziel-Server eingerichtet wird. Dieses Verfahren bietet den Vorteil, dass eine zu integrierende Anwendung ihre Kommunikation, die Web-basiert ist (z.B. XHR) bzw. auf Web-Sockets basiert, weiter nutzen kann. Es ist keine aufwändige Umstellung auf eine andere, ggf. proprietäre Kommunikation notwendig. Außerdem können so alle Infrastrukturelemente, insbesondere Security-Einrichtungen, Redundanzverfahren etc. der proprietären industriellen Kommunikation weiterverwendet werden.

Die Lösung der Aufgabe sieht außerdem eine Anordnung zum Betrieb einer Anwendung auf einem industriellen Bedien- und Beobachtungsgerät vor, wobei das industrielle Bedien- und Beobachtungsgerät mittels einer proprietären industriellen Kommunikationsverbindung an eine Kommunikations-Infrastruktur angebunden und darüber mit einem HMI-Server verbunden ist, und wobei die Anwendung zur Kommunikation mittels eines Internet-Protokolls eingerichtet ist. Dabei ist in der Kommunikations-Infrastruktur ein Reverse-Proxyserver mit einem Web-Interface vorgesehen, wobei die Anwendung zur Kommunikation mit dem Web- Interface (z.B. Web-Socket-Interface oder http-Interface) des Reverse-Proxyservers eingerichtet ist, wobei vorgesehen ist, diese Kommunikation innerhalb eines Kommunikationskanals der industriellen Kommunikationsverbindung durchzuführen, wobei der Reverse-Proxyserver zur Kommunikation mit dem HMI-Server mittels einer weiteren proprietären industriellen Kommunikationsverbindung eingerichtet ist, wobei der Server zur Kommunikation mit einem Web- Interface zumindest eines Ziel-Servers mittels eines Internet-Protokolls eingerichtet ist, und wobei der Server eine Umsetzungskomponente zur Umsetzung einer Kommunikation zwischen dem Reverse-Proxyserver und dem Ziel-Server eingerichtet ist. Mittels dieser Anordnung können dieselben Vorteile realisiert werden, die bereits anhand des Verfahrens diskutiert wurden.

Vorteilhafte Ausgestaltungen der Erfindung sind in den abhängigen Patentansprüchen angegeben. Die dabei beschriebenen Merkmale und deren Vorteile können sowohl einzeln als auch in sinnfälliger Kombination realisiert werden.

Vorteilhaft verwendet der Ziel-Server ein Web-Socket-Interface, an das die Kommunikation des HMI-Servers angebunden ist. Dabei ist es also möglich, dass das Web-Socket-Interface des Ziel-Servers mittels der vorbeschriebenen Maßnahmen, insbesondere mittels des Reverse-Proxyservers, bis zum Bedien- und Beobachtungsgerät über die vorhandene proprietäre Kommunikationsinfrastruktur hinweg transparent nutzbar ist, so dass lokal im Bedien- und Beobachtungsgerät Web-basierte Controls und andere Elemente verwendet werden können, die somit Zugriff auf den Ziel-Server haben.

Vorteilhaft verwendet der HMI-Server eine Umsetzungskomponente, die in einer vorteilhaften Variante zur Etablierung einer Vielzahl von Kommunikationsverbindungen zu einer Mehrzahl von Ziel-Servern eingerichtet ist. Vorteilhaft setzt diese Umsetzungskomponente die mittels der proprietären Kommunikationsstrecke bzw. proprietären Kommunikations-Infrastruktur mit dem Reverse-Proxyserver ausgetauschten Daten so um, dass eine Verbindung mit dem Web-Socket-Interface des Ziel-Servers ermöglicht wird.

Der Reverse-Proxyserver ist in der Kommunikations-Infrastruktur vorgesehen, so dass dieser von einer Vielzahl von Bedien- und Beobachtungsgeräten gleichzeitig nutzbar ist. Vorteil bildet ein Web-Server den "Host" für den Reverse-Proxyserver.

In einer vorteilhaften Variante wird das Web-Socket-Interface des Reverse-Proxyservers intern in einem Browser des Bedien- und Beobachtungsgeräts zur Verfügung gestellt ("HMI-Socket"). Neben dem Vorteil, dass somit das Bedien- und Beobachtungsgerät nach "außen" nur mittels eines einzigen Kanals des proprietären Kommunikationsprotokolls der Infrastruktur kommunizieren braucht, ergibt sich der weitere Vorteil, dass weniger Ressourcen zwischen dem Browser und dem Reverse-Proxyserver verwendet werden müssen.

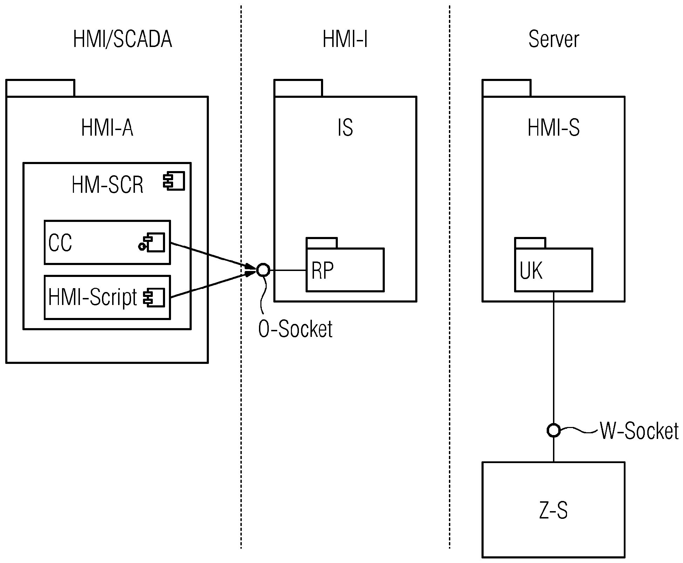

Ein Ausführungsbeispiel des erfindungsgemäßen Verfahrens und einer erfindungsgemäßen Anordnung wird nachfolgend anhand der Zeichnung erläutert.

Dabei zeigt die schematische Figur drei logische Ebenen der Kommunikation mit den entsprechenden logischen Kommunikationsverbindungen und den jeweils in den Ebenen angeordneten Geräten und Einrichtungen.

In der Figur ist im linken Teil ein Bedien- und Beobachtungsgerät mit einer Anwendung HMI-A ("HMI-Anwendung") gezeigt, wobei die Anwendung ein Bedienbild HMI-SCR ("HMI-screen") umfasst. Das Bedienbild umfasst beispielhaft zwei Objekte CC, HMI-Script ("Custom-Control", "Script"), die zur Kommunikation durch Zugriff auf einen Web-Socket eingerichtet sind, also gemäß einem Internet-Protokoll ihre Kommunikation adressieren und abwickeln.

Selbstverständlich können diese und auch die nachfolgend eingeführten Einrichtungen in einer realen Anordnung in vielfältiger Anzahl und verschiedener Ausführung auftreten, ohne vom hier gezeigten Konzept abzuweichen.

Im mittleren Teil der Figur ist die Ebene der Kommunikations-Infrastruktur HMI-I gezeigt, wobei diese Ebene neben einem Kommunikations-Server IS mit einem Web-Server hier also auch verschiedene andere Komponenten wie Switche, Router und dergleichen umfasst. In dieser Schicht sind neben der Kommunikation auch verschiedene andere Dienste und Protokolle realisiert, z.B. Security (Sicherheit), Redundanz etc. In dieser Schicht werden industrielle Transportnetze verwendet, z.B. PROFInet oder TCP/IP, mit denen auch proprietäre Kommunikationsprotokolle gefahren werden, die die oben genannten Dienste wie Security, Redundancy etc. nutzen.

Im rechten Teil der Figur ist die Ebene der Server gezeigt, wobei hier insbesondere HMI- und/oder SCADA Server HMI-S angeordnet sind, die unter anderem die Daten für die Anwendung HMI-A bereitstellen und daneben auch Funktionen für eine Produktionsüberwachung und -steuerung etc. aufweisen oder solchen Daten bereitstellen. Der gezeigte Server ist mittels proprietärer Kommunikation an die Infrastruktur HM-I angebunden. Andererseits ist der Server auch kommunikativ mit zumindest einem externen Server, dem Ziel-Server Z-S, verbunden, auf dem unterschiedliche Web-basierte Dienste laufen können. Ein solcher Dienst kann beispielsweise ein Web-Server zur Bereitstellung einer Information sein, die auf einem "Control" CC der HMI-Anwendung HMI-A angezeigt werden soll.

Im Server IS ist ein Reverse-Proxyserver RP angeordnet, der der Anwendung HMI-A ein Web- Interface O-Socket ("Open Socket") bereitstellt, wobei die Zugriffe und der Datenverkehrt der Objekte CC, HMI-Script auf dieses Web- Interface innerhalb der industriellen Kommunikation transportiert werden. Dabei steht der Reverse-Proxyserver RP und dessen Web- Interface selbstverständlich einer Vielzahl von HMI-Geräten und - Anwendungen zur Verfügung (nicht dargestellt).

Während jedes "Control" CC, HMI-Script eine einzelne, "getunnelte" Verbindung zum Web-Interface O-Socket unterhält, mit anderer Kommunikation in der proprietären Kommunikation bündelt und ggf. re-adressiert der Reverse-Proxyserver RP diese Requests und leitet diese an die Umsetzungskomponente UK des HMI-Servers HMI-S weiter. Die Umsetzungskomponente UK wertet die Requests aus und adressiert sie mittels einer Internetkonformen Kommunikation, z.B. Http oder Http-S, an das Web-Interface W-Socket eines oder mehrerer Ziel-Server Z-S weiter. Mit anderen Worten: Der Reverse-Proxyserver RP und die Umsetzungskomponente UK "verlängern" die Web -Interfaces W-Socket externer Server innerhalb der industriellen Kommunikation und unter Nutzung der inhärenten Vorteile dieser Kommunikation (insbesondere Security, Redundanz) zu den Bedien- und Beobachtungsgeräten. Dabei können sich Nutzer und Anwendungen der Bedien- und Beobachtungsgeräte über diese Kommunikationsstrecke auch gegenüber den externen Web-Servern der Ziel-Server authentifizieren.

## Patentansprüche

1. Verfahren zum Betrieb einer Anwendung (HMI-A) auf einem industriellen Bedien- und Beobachtungsgerät,
wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server verbunden ist, und
wobei die Anwendung (HMI-A) zur Kommunikation mittels eines Internet-Protokolls eingerichtet ist,
**dadurch gekennzeichnet,**
**dass** in der Kommunikations-Infrastruktur ein Reverse-Proxyserver (RP) mit einem Web- Interface (O-Socket) vorgesehen wird,
**dass** die Anwendung zur Kommunikation mit dem Web- Interface des Reverse-Proxyservers (RP) eingerichtet wird, wobei diese Kommunikation innerhalb eines Kommunikationskanals der industriellen Kommunikationsverbindung durchgeführt wird,
**dass** der Reverse-Proxyserver (RP) zur Kommunikation mit dem HMI-Server mittels einer weiteren proprietären industriellen Kommunikationsverbindung eingerichtet wird,
**dass** der Server zur Kommunikation mit einem Web- Interface (W-Socket) zumindest eines Ziel-Servers (Z-S) mittels eines Internet-Protokolls eingerichtet wird, und
**dass** der Server zur Umsetzung einer Kommunikation zwischen dem Reverse-Proxyserver (RP) und dem Ziel-Server (Z-S) eingerichtet wird.

2. Verfahren nach Patentanspruch 1,
**dadurch gekennzeichnet,**
**dass** die Kommunikations-Infrastruktur (HMI-I) einen Web-Server umfasst und der Reverse-Proxyserver (RP) mit dem Web-Interface (O-Socket) auf dem Web-Server betrieben wird.

3. Verfahren nach einem der vorhergehenden Patentansprüche,
**dadurch gekennzeichnet,**
**dass** die Umsetzungskomponente (UK) eine Mehrzahl paralleler Verbindungen zu einer Mehrzahl von Ziel-Servern (Z-S) verwaltet.

4. Verfahren nach einem der vorhergehenden Patentansprüche,
**dadurch gekennzeichnet,**
**dass** im Bedien- und Beobachtungsgerät ein proprietäres HMI-Script ausgeführt wird, wobei Zugriffe des HMI-Scriptes auf das Web-Interface des Ziel-Servers (Z-S) durch den Reverse-Proxyserver und die Umsetzungskomponente geleitet werden.

5. Verfahren nach einem der vorhergehenden Patentansprüche,
**dadurch gekennzeichnet,**
**dass** sich die Umsetzungskomponente (UK) anstelle der Anwendung (HMI-A) bei dem Ziel-Server (Z-S) authentifiziert.

6. Anordnung zum Betrieb einer Anwendung (HMI-A) auf einem industriellen Bedien- und Beobachtungsgerät,
wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server verbunden ist, und
wobei die Anwendung (HMI-A) zur Kommunikation mittels eines Internet-Protokolls eingerichtet ist,
**dadurch gekennzeichnet,**
**dass** in der Kommunikations-Infrastruktur ein Reverse-Proxyserver (RP) mit einem Web-Interface (O-Socket) vorgesehen ist,
**dass** die Anwendung (HMI-A) zur Kommunikation mit dem Web-Interface (O-Socket) des Reverse-Proxyservers (RP) eingerichtet ist, wobei vorgesehen ist, diese Kommunikation innerhalb eines Kommunikationskanals der industriellen Kommunikationsverbindung durchzuführen,
**dass** der Reverse-Proxyserver (RP) zur Kommunikation mit dem HMI-Server mittels einer weiteren proprietären industriellen Kommunikationsverbindung eingerichtet ist,
**dass** der Server zur Kommunikation mit einem Web-Interface (W-Socket) zumindest eines Ziel-Servers (Z-S) mittels eines Internet-Protokolls eingerichtet ist, und
**dass** der Server eine Umsetzungskomponente (UK) zur Umsetzung einer Kommunikation zwischen dem Reverse-Proxyserver (RP) und dem Ziel-Server (Z-S) eingerichtet ist.

7. Anordnung nach Patentanspruch 6,
**dadurch gekennzeichnet,**
**dass** die Kommunikations-Infrastruktur (HMI-I) einen Web-Server umfasst und der Reverse-Proxyserver (RP) mit dem Web-Interface (O-Socket) auf dem Web-Server installiert ist.

8. Anordnung nach einem der Patentansprüche 6 oder 7,
**dadurch gekennzeichnet,**
**dass** im Bedien- und Beobachtungsgerät die Ausführung eines proprietären HMI-Scripts vorgesehen ist, wobei weiter vorgesehen ist, dass Zugriffe des HMI-Scriptes auf das Web-Interface des Ziel-Servers (Z-S) durch den Reverse-Proxyserver und die Umsetzungskomponente geleitet werden.

9. Anordnung nach einem der Patentansprüche 6 bis 8,
**dadurch gekennzeichnet,**
**dass** vorgesehen ist, dass sich die Umsetzungskomponente (UK) anstelle der Anwendung (HMI-A) bei dem Ziel-Server (Z-S) authentifiziert.
